# EUROPEAN PATENT APPLICATION

(11) **EP 2 755 119 A1**
(43) Date of publication of application: **16.07.2014**
(21) Application number: 13194556.0
(22) Date of filing: 27.11.2013
(51) Int. Cl.: G06F 3/0481, G06F 3/0486, G06F 17/21

(54) **Method for moving interface object and apparatus for supporting movement of interface object**

(30) Priority: 14.01.2013 CN 201310012680
(71) Applicant: Huawei Device Co., Ltd., Longgang District Shenzhen Guangdong 518129 (CN)
(72) Inventor: Liu, Weijie, 518129 Shenzhen (CN)
(74) Representative: Isarpatent

(57) **Abstract**

Embodiments of the present invention disclose a method and an apparatus for moving an interface object. The method may include: receiving an instruction for moving a first interface object on an interface from a first area to a second area; updating, according to the received instruction, a display position of the first interface object on the interface to the second area; obtaining a second interface object according to a preset rule; searching for, in an entire interface range on the interface except the second area, a display position for the second interface object; updating a display position of the second interface object according to the display position found through searching; and displaying all interface objects on the interface according to display positions of all the interface objects. Because in the embodiments of the present invention, the display positions of the first interface object and the second interface object on the interface are both updated, a moving range of the first interface object may be not limited. Therefore, in the present invention, it is implemented that the first interface object moves to any position on the interface, which improves user experience.

## Description

### TECHNICAL FIELD

The present invention relates to the field of communications, and in particular, to a method for moving an interface object and an apparatus for supporting movement of an interface object.

### BACKGROUND

In recent years, intelligent terminal devices have been developing rapidly. An intelligent terminal allows a user to perform personalized settings on the terminal, for example, set a desktop object that the user likes and a position of the desktop object, even perform personalized moving on the desktop object. An existing intelligent moving solution of a desktop object (including a desktop widget Widget, a desktop application shortcut Shortcut and so on) is implemented as follows: When each row of a screen is occupied by a desktop object, and when it is intended to move a certain desktop object (a moved object), the desktop object may be operated on the desktop, so as to move the desktop object to a position of another desktop object (a target object) having a height same as the desktop object and a width smaller than the desktop object. It can be seen that, the solution of the prior art meets, to a certain degree, a requirement of a user for performing personalized settings on the desktop object. However, the solution can only respond to movement in a direction from a big desktop object to a small desktop object, which presents a great limitation and cannot meet a requirement of the user for moving the desktop object to any position.

### SUMMARY

Embodiments of the present invention provide a method for moving an interface object and an apparatus for supporting movement of an interface object, which may meet a requirement of a user for moving the interface object (including a desktop widget Widget and a desktop application shortcut Shortcut and the like on the desktop and an application shortcut Shortcut and the like on an application program interface) to any position.

In a first aspect, the present invention provides a method for moving an interface object, which may include:
receiving an instruction for moving a first interface object on an interface from a first area to a second area;
updating, according to the received instruction, a display position of the first interface object on the interface to the second area;
obtaining a second interface object according to a preset rule, and searching for, in an entire interface range on the interface except the second area, a display position for the second interface object, where the second interface object is an interface object on the interface except the first interface object;
updating a display position of the second interface object according to the display position found through searching; and
displaying all interface objects on the interface according to display positions of all the interface objects.

With reference to the first aspect, in a first possible implementation manner, the searching for, in an entire interface range on the interface except the second area, a display position for the second interface object may include:
taking a historical display position of the second interface object as the display position of the second interface object when the historical display position is an available display area; and
searching for, in the entire interface range on the interface except the second area, the display position for the second interface object when the historical display position of the second interface object is an occupied display area, where the display position is a remaining available display area on the interface.

With reference to the first aspect, or the first possible implementation manner of the first aspect, in a second possible implementation manner, the searching for, in an entire interface range on the interface except the second area, a display position for the second interface object may include:
searching for a position by taking a first row and a first column of the interface area as a searching starting point, and by moving in a manner of increasing a row sequence number by one sequentially or increasing a column sequence number by one sequentially, until a display area which may be used to display the second interface object is found through searching.

With reference to the first aspect, or the first possible implementation manner of the first aspect, in a third possible implementation manner, the preset rule includes:
height order from high to low; or,
width order from wide to narrow; or,
area order from big to small.

In a second aspect, an embodiment of the present invention provides an apparatus for supporting movement of an interface object, which may include:
a receiving module, configured to receive an instruction for moving a first interface object on an interface from a first area to a second area;
a first updating module, configured to update, according to the instruction received by the receiving module, a display position of the first interface object on the interface to the second area;
an obtaining module, configured to obtain a second interface object according to a preset rule;
a searching module, configured to search for, in an entire interface range on the interface except the second area, a display position for the second interface object obtained by the obtaining module, where the second interface object is an interface object on the interface except the first interface object;
a second updating module, configured to update a display position of the second interface object according to the display position found through searching by the searching module; and
a displaying module, configured to display all interface objects on the interface according to display positions of all the interface objects.

With reference to the second aspect, in a first possible implementation manner, the apparatus may further include:
a historical determining module, configured to determine whether a historical display position of the second interface object is an available display area, and
send the historical display position as the display position of the second interface object to the second updating module when the historical display position of the second interface object is an available display area; and
start the searching module when the historical display position of the second interface object is an occupied display area.

With reference to the second aspect, or the first possible implementation manner of the second aspect, in a second possible implementation manner, the searching module is specifically configured to search for a position by taking a first row and a first column of the interface area as a searching starting point, and by moving in a manner of increasing a row sequence number by one sequentially or increasing a column sequence number by one sequentially, until a display area which may be used to display the second interface object is found through searching.

With reference to the second aspect, or the first possible implementation manner of the second aspect, in a third possible implementation manner, the preset rule includes:
height order from high to low; or,
width order from wide to narrow; or,
area order from big to small.

It can be seen from the foregoing that, in some feasible implementation manners of the present invention, the instruction for moving the first interface object on the interface from the first area to the second area is received; the display position of the first interface object on the interface is updated to the second area according to the received instruction; the second interface object is obtained according to the preset rule; the display position for the second interface object is searched for in the entire interface range on the interface except the second area, where the second interface object is the interface object on the interface except the first interface object; the display position of the second interface object is updated according to the display position found through searching; and all the interface objects are displayed on the interface according to the display positions of all the interface objects. Because in the embodiments of the present invention, the display positions of the first interface object and the second interface object on the interface are both updated, a moving range of the first interface object may be not limited. Therefore, in the present invention, it is implemented that the first interface object moves to any position on the interface, which improves user experience.

### BRIEF DESCRIPTION OF DRAWINGS

FIG. 1 is a schematic flow chart of a first embodiment of a method for moving an interface object according to the present invention;
FIG. 2 is a schematic flow chart of a second embodiment of a method for moving an interface object according to the present invention;
FIG. 3 is a schematic structural composition diagram of a first embodiment of an apparatus for supporting intelligent movement of an interface object according to the present invention;
FIG. 4 is a schematic structural composition diagram of a second embodiment of an apparatus for supporting intelligent movement of an interface object according to the present invention;
FIG. 5 is a schematic structural composition diagram of a third embodiment of an apparatus for supporting intelligent movement of an interface object according to the present invention;
FIG. 6 is a diagram of an example of moving an interface object according to the present invention;
FIG. 7 is a diagram of another example of moving an interface object according to the present invention;
FIG. 8 is a diagram of another example of moving an interface object according to the present invention; and
FIG. 9 is a diagram of another example of moving an interface object according to the present invention.

### DESCRIPTION OF EMBODIMENTS

To make the objectives, technical solutions, and advantages of the present invention clearer, the following further describes the present invention in detail with reference to the accompanying drawings.

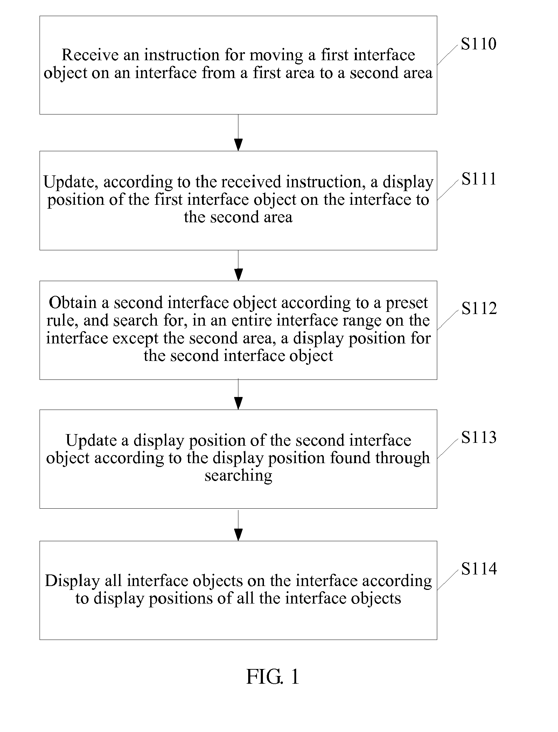

FIG. 1 is a schematic flow chart of a first embodiment of a method for moving an interface object according to the present invention. As shown in FIG. 1, the method according to an embodiment of the present invention may include:

Step S110: Receive an instruction for moving a first interface object on an interface from a first area to a second area.

In a specific implementation, the second area in the embodiment of the present invention may be any area, which may be used to display the first interface object, on the interface except the first area.

In a specific implementation, the interface object in the embodiment of the present invention includes any icon which may be displayed on the interface, where the interface may be a startup desktop or an application program interface after entering an application program; the interface object may be a desktop widget Widget on the desktop and an application shortcut Shortcut on the desktop; and the interface object may also be a widget or a shortcut on an opened application program interface.

Step S111: Update, according to the received instruction, a display position of the first interface object on the interface to the second area.

Step S112: Obtain a second interface object according to a preset rule, and search for, in an entire interface range on the interface except the second area, a display position for the second interface object.

In a specific implementation, the second interface object is an interface object on the interface except the first interface object. In some feasible implementation manners, there may be one second interface object (for example, when there are only two interface objects on the interface, one of which is a first interface object and the other of which is a second interface object). In some feasible implementation manners, there are multiple second interface objects (for example, when there are three or more interface objects on the interface, one of which is a first interface object, and any other interface object of which except the first interface object is a second interface object). Moreover, when there are multiple second interface objects, the second interface object needs to be obtained more than once according to the preset rule in step S112, and each time when the second interface object is obtained, the display position is searched for the second interface object.

In some feasible implementation manners, the preset rule includes any rule, as long as the rule may be used to appoint order of obtaining the second interface object, such as: obtaining the second interface object according to height order from high to low; or obtaining the second interface object according to width order from wide to narrow; or obtaining the second interface object according to area order from big to small; or obtaining the second interface object according to height order from low to high; or obtaining the second interface object according to width order from narrow to wide; or, according to area order from small to big; or, in a case with an equal height, obtaining the second interface object according to width order from wide to narrow; or, in a case with an equal width, obtaining the second interface object according to height order from high to low. Which kind of manner is specifically adopted should be determined according to an actual requirement, which is not specifically limited in the embodiment.

In some feasible implementation manners, the embodiment of the present invention may indicate a display position of the interface object on the interface through coordinates on the interface, where the coordinates are expressed in multiple forms, such as, according to vertex coordinates of an interface area (pixel coordinates of four vertexes of the interface area), or according to row and column coordinates occupied by an interface area (a starting row and a starting column of the interface area, a height in a row direction (the number of rows extending from the starting row), and a width in a column direction (the number of columns extending from the starting column)).

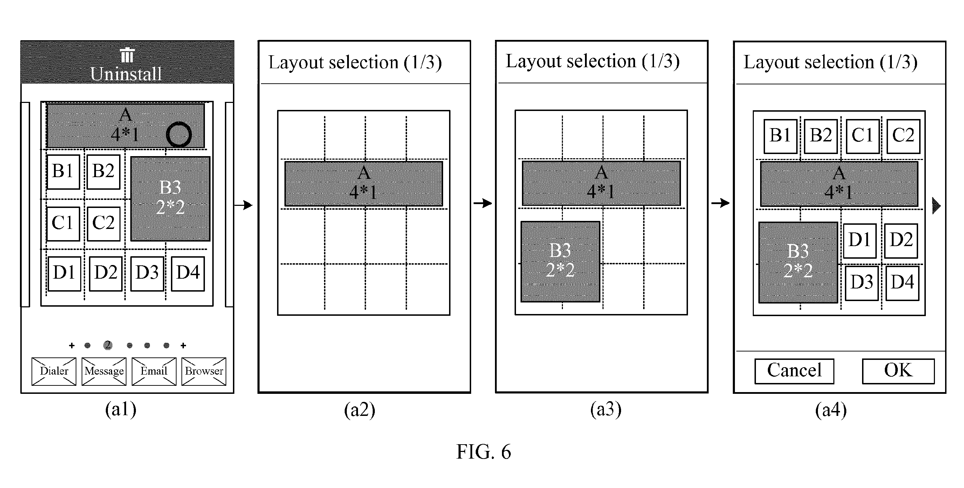

The following takes the row and column coordinates occupied by the interface area as an example, to describe an expression manner of the display position of the interface object on the interface. For example, referring to FIG. 6, each horizontal line in the display area in FIG. 6 is a row on a screen, and each vertical line is a column on the screen. Then the coordinates (1, 1, 1, 1) may indicate that the display position of the interface object on the interface is an interface area starting from a first row (a first horizontal line on the interface) and a first column (a first vertical line on the interface) on the interface, having a height of one row (extending by one row downward from the first row) and having a width of one column (extending by one column to right from the first column), that is, an area indicated by a first grid on the interface. In the same way, coordinates (a, b, c, d) may indicate that the display position of the interface object on the interface is an interface area starting from an a^{th} row and a b^{th} column on the interface, having a height of c rows (extending by c rows downward from the a^{th} row), and having a width of d columns (extending by d columns to right from the b^{th} column). Generally, a range of the interface area is limited, and the range of a, b, c, and d is also limited. Generally, a+c is less than or equal to the maximum number of rows on the interface; b+d is less than or equal to the maximum number of columns on the interface. In this way, a display position on the interface of an interface object A on the interface may be indicated as (1, 1, 1, 4), indicating that the display position of the interface object A on the interface is an interface area starting from a first row and a first column on the interface, and having a height of one row (extending by one row downward from the first row) and a width of four columns (extending by four columns to right from the first column) (the figure only shows the width and the height of the interface object, for example, "4*1" indicates that the width of the interface object A is four columns and the height thereof is one row).

In some feasible implementation manners, in step S112, a position is specifically searched for by taking the first row and the first column of the interface area as a searching starting point, and by moving in a manner of increasing a row sequence number by one sequentially or increasing a column sequence number by one sequentially, until the display area which may be used to display the second interface object is found through searching. Certainly, in a specific implementation, in step S112, any other position on the interface may also be taken as the searching starting point. Certainly, in addition, in step S112, an idle area in a historical record may be further searched for according to a set rule (the rule may be similar to the rule for obtaining the second interface object, and details are not repeatedly described herein), until the display area which may be used to display the second interface object is found through searching.

Step S113: Update a display position of the second interface object according to the display position found through searching.

It should be noted that, display positions of all interface objects are saved in preset positions, for example: the display positions of all the interface objects may be saved in a preset XML file; or may also be saved in a preset data sheet. As for a storage manner, reference may be made to a specific implementation of the prior art, and details are not repeatedly described herein.

Step S114: Display all the interface objects on the interface according to the display positions of all the interface objects.

When the interface object is displayed on the interface, the display positions of all the interface objects on the interface may be read from the foregoing preset positions, and all the interface objects are displayed on the interface. As for a specific reading and displaying manner, reference may be made to a specific implementation of the prior art, and details are not repeatedly described herein.

With reference to FIG. 6, the following further describes in detail a processing flow and a processing result of the embodiment. Referring to FIG. 6, (a1) of FIG. 6 is an interface state diagram of the first interface object before being moved; (a2) of FIG. 6 is a schematic diagram of a display position in the second area on the interface where the first interface object is displayed; (a3) of FIG. 6 is a schematic diagram of display positions on the interface of the first interface object and an obtained second interface object having a highest height; and (a4) of FIG. 6 is a display effect diagram of a final interface.

Referring to (a1) of FIG. 6, in step S110, an instruction for moving the first interface object A on the interface from the first area to the second area may be received according to an operation made by a user on the interface (for example, the user presses the first interface object on the interface and pulls the first interface object to the second area, where a circle and an arrow in the figure show a direction in which the user moves the first interface object); further, referring to (a2) of FIG. 6, in step S111, the display position of the first interface object A on the interface is updated to the second area according to the received instruction. Further, referring to (a3) of FIG. 6, in step S 112, when the second interface object is obtained according to height order from high to low, B3 is obtained first ("2*2" indicates that the B3 has "a width of two columns and a height of two rows"), then the position is searched for by taking the first row and the first column of the interface area as the searching starting point, and by moving in the manner of increasing the row sequence number by one sequentially or increasing the column sequence number by one sequentially, until a display area which may be used to display the B3 (that is, a display area as shown in (a3)) is found through searching. Certainly, in step S112, a manner of searching for a historical idle area may be also used to find the display area as shown in (a3), which is taken as the display position of the B3. As for other second interface objects (B1, B2, C1, C2, D1, D2, D3, D4) on the interface, display positions may be searched for in a same manner of searching for the display position of the B3, and details are not repeatedly described herein. Further, referring to (a4) of FIG. 6, after processing in steps S113 and S114, on a final display interface, the first interface object is displayed in the second area, while the second interface objects are also respectively displayed in the positions searched in step S112.

FIG. 6 shows a schematic diagram of an example of moving the first interface object A ("4*1") towards the second interface object B3 ("2*2") narrower and higher than the first interface object.

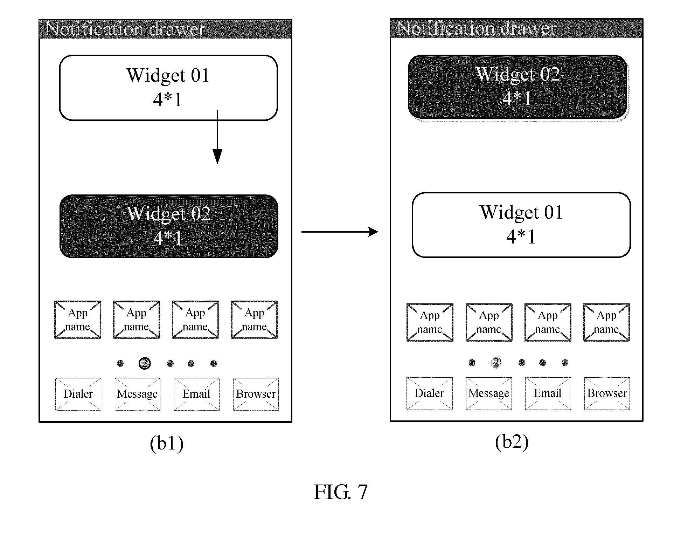

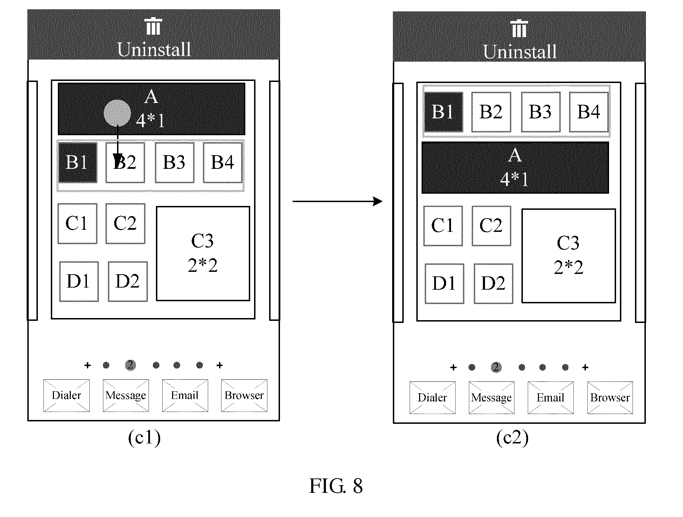

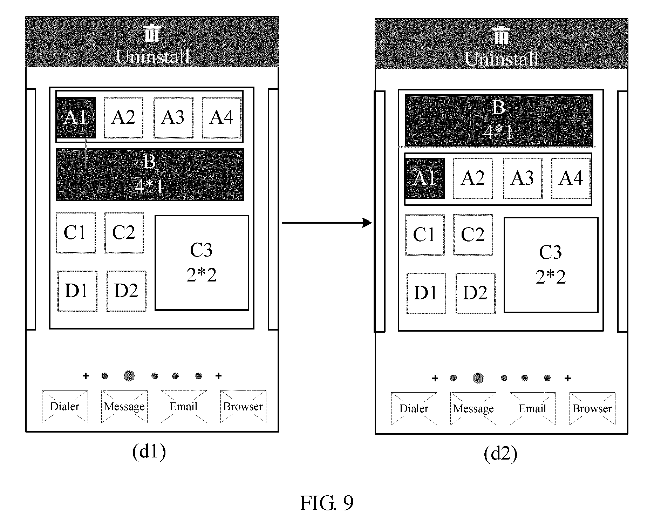

In a specific implementation, because according to the embodiment of the present invention, the display positions of the first interface object and the second interface object on the interface are both updated, a moving range of the first interface object may be not limited. Therefore, in the present invention, it is implemented that the first interface object moves to any position on the interface. Specifically, reference may be made to a moving display effect diagram of a first interface object in other scenarios of FIG. 7 to FIG. 9. It can be known from FIG. 7, when both a height and a width of a first interface object Widget 01 are equal to a height and a width of a second interface object Widget 02, it may be implemented by using the method according to the embodiment of the present invention that the first interface object Widget 01 moves to the second interface object Widget 02. It can be known from FIG. 8, when both a height and a width of the first interface object A are respectively greater than or equal to a height and a width of a second interface object B1, it may be implemented by using the method according to the embodiment of the present invention that the first interface object A moves to the second interface object B1. It can be known from FIG. 9, when both a height and a width of the first interface object A1 are respectively less than or equal to a height and a width of a second interface object B, it may be implemented by using the method according to the embodiment of the present invention that the first interface object A1 moves to the second interface object B.

It can be seen from the foregoing that, in some feasible implementation manners of the present invention, the instruction for moving the first interface object on the interface from the first area to the second area is received; the display position of the first interface object on the interface is updated to the second area according to the received instruction; the second interface object is obtained according to the preset rule; the display position for the second interface object is searched for in the entire interface range on the interface except the second area, where the second interface object is the interface object on the interface except the first interface object; the display position of the second interface object is updated according to the display position found through searching; and all the interface objects are displayed on the interface according to the display positions of all the interface objects. Because in the embodiment of the present invention, the display positions of the first interface object and the second interface object on the interface are both updated, a moving range of the first interface object may be not limited. Therefore, in the present invention, it is implemented that the first interface object moves to any position on the interface, which improves user experience.

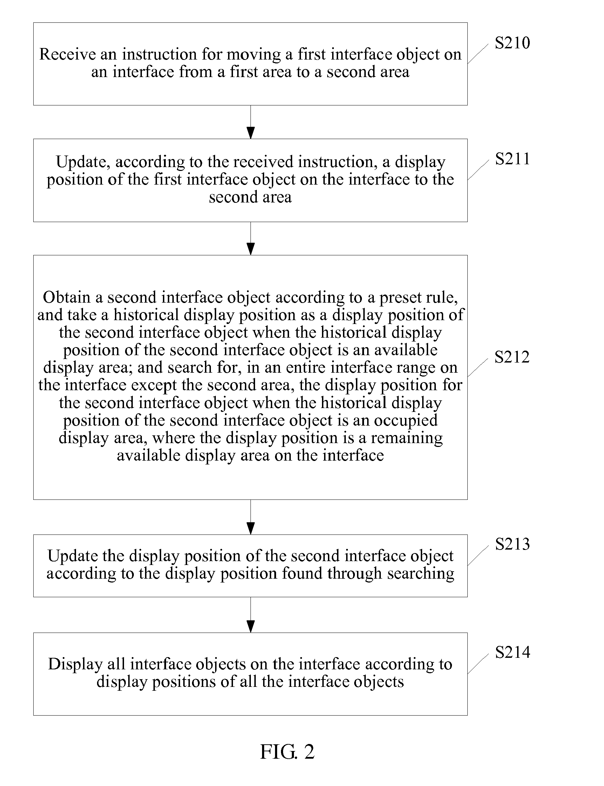

FIG. 2 is a schematic flow chart of a second embodiment of a method for moving an interface object according to the present invention. As shown in FIG. 2, the method according to an embodiment of the present invention may include the following steps.

Step S210: Receive an instruction for moving a first interface object on an interface from a first area to a second area.

In a specific implementation, the second area in the embodiment of the present invention may be any area, which may be used to display the first interface object, on the interface except the first area.

In a specific implementation, the interface object in the embodiment of the present invention includes any icon which may be displayed on the interface, where the interface may be a startup desktop or an application program interface after entering an application program; the interface object may be a desktop widget Widget on the desktop and an application shortcut Shortcut on the desktop; and the interface object may also be a widget or a shortcut on an opened application program interface.

Step S211: Update, according to the received instruction, a display position of the first interface object on the interface to the second area.

Step S212: Obtain a second interface object according to a preset rule, and take a historical display position as a display position of the second interface object when the historical display position of the second interface object is an available display area; and search for, in an entire interface range on the interface except the second area, the display position for the second interface object when the historical display position of the second interface object is an occupied display area, where the display position is a remaining available display area on the interface.

In a specific implementation, the second interface object is an interface object on the interface except the first interface object. In some feasible implementation manners, there may be one second interface object (for example, when there are only two interface objects on the interface, one of which is a first interface object and the other of which is a second interface object). In some feasible implementation manners, there are multiple second interface objects (for example, when there are three or more interface objects on the interface, one of which is a first interface object, and any other interface object of which except the first interface object is a second interface object). Moreover, when there are multiple second interface objects, the second interface object needs to be obtained more than once according to the preset rule in step S112, and each time when the second interface object is obtained, the display position is searched for the second interface object.

In some feasible implementation manners, the preset rule includes any rule, as long as the rule may be used to appoint order of obtaining the second interface object, such as: obtaining the second interface object according to height order from high to low; or obtaining the second interface object according to width order from wide to narrow; or obtaining the second interface object according to area order from big to small; or obtaining the second interface object according to height order from low to high; or obtaining the second interface object according to width order from narrow to wide; or, according to area order from small to big; or, in a case with an equal height, obtaining the second interface object according to width order from wide to narrow; or, in a case with an equal width, obtaining the second interface object according to height order from high to low.

In some feasible implementation manners, the embodiment of the present invention may indicate the display position of the interface object on the interface through coordinates on the interface, where the coordinates are expressed in multiple forms, such as, according to vertex coordinates of the interface area (pixel coordinates of four vertexes of the interface area), or according to row and column coordinates occupied by the interface area (a starting row and a starting column of the interface area, a height in the row direction (the number of rows extending from the starting row), and a width in the column direction (the number of columns extending from the starting column)).

The following takes the row and column coordinates occupied by the interface area as an example, to describe an expression manner of the display position of the interface object on the interface. For example, referring to FIG. 6, each horizontal line in the display area in FIG. 6 is a row on a screen, and each vertical line is a column on the screen. Then the coordinates (1, 1, 1, 1) may indicate that the display position of the interface object on the interface is an interface area starting from a first row (a first horizontal line on the interface) and a first column (a first vertical line on the interface) on the interface, having a height of one row (extending by one row downward from the first row) and having a width of one column (extending by one column to right from the first column), that is, an area indicated by a first grid on the interface. In the same way, coordinates (a, b, c, d) may indicate that the display position of the interface object on the interface is an interface area starting from an a^{th} row and a b^{th} column on the interface, having a height of c rows (extending by c rows downward from the a^{th} row), and having a width of d columns (extending by d columns to right from the b^{th} column). Generally, a range of the interface area is limited, and the range of a, b, c, and d is also limited. Generally, a+c is less than or equal to the maximum number of rows on the interface; b+d is less than or equal to the maximum number of columns on the interface. In this way, a display position on the interface of an interface object A on the interface may be indicated as (1, 1, 1, 4), indicating that the display position of the interface object A on the interface is an interface area starting from a first row and a first column on the interface, and having a height of one row (extending by one row downward from the first row) and a width of four columns (extending by four columns to right from the first column) (the figure only shows the width and the height of the interface object, for example, "4*1" indicates that the width of the interface object A is four columns and the height thereof is one row).

In some feasible implementation manners, in step S212, when the historical display position of the second interface object is the occupied display area, and when the display position is searched for the second interface object in the entire interface range on the interface except the second area, specifically, a position is searched for by taking a first row and a first column of the interface area as a searching starting point, and by moving in a manner of increasing a row sequence number by one sequentially or increasing a column sequence number by one sequentially, until a display area which may be used to display the second interface object is found through searching. Certainly, in a specific implementation, in step S212, any other position on the interface may also be taken as the searching starting point. Certainly, in addition, in step S212, an idle area in a historical record may be further searched for according to a set rule (the rule may be similar to the rule for obtaining the second interface object, and details are not repeatedly described herein), until the display area which may be used to display the second interface object is found through searching.

In the embodiment of the present invention, in step S212, when the historical display position of the second interface object is the available display area, the historical display position is taken as the display position of the second interface object, which thereby saves a procedure for searching for the display position for the second interface object, and improves efficiency of moving the first interface object.

Step S213: Update a display position of the second interface object according to the display position found through searching.

It should be noted that, display positions of all interface objects are saved in preset positions, for example: the display positions of all the interface objects may be saved in a preset XML file; or may also be saved in a preset data sheet. As for a storage manner, reference may be made to a specific implementation of the prior art, and details are not repeatedly described herein.

Step S214: Display all the interface objects on the interface according to the display positions of all the interface objects.

When the interface object is displayed on the interface, the display positions of all the interface objects on the interface may be read from the foregoing preset positions, and all the interface objects are displayed on the interface. As for a specific reading and displaying manner, reference may be made to a specific implementation of the prior art, and details are not repeatedly described herein.

With reference to FIG. 6, the following further describes in detail a processing flow and a processing result of the embodiment. Referring to FIG. 6, (a1) of FIG. 6 is an interface state diagram of the first interface object before being moved; (a2) of FIG. 6 is a schematic diagram of a display position in the second area on the interface where the first interface object is displayed; (a3) of FIG. 6 is a schematic diagram of display positions on the interface of the first interface object and an obtained second interface object having a highest height; and (a4) of FIG. 6 is a display effect diagram of a final interface.

Referring to (a1) of FIG. 6, in step S210, an instruction for moving the first interface object A on the interface from the first area to the second area may be received according to an operation made by a user on the interface (for example, the user presses the first interface object on the interface and pulls the first interface object to the second area, where a circle and an arrow in the figure show a direction in which the user moves the first interface object); further, referring to (a2) of FIG. 6, in step S211, the display position of the first interface object A on the interface is updated to the second area according to the received instruction. Further, referring to (a3) of FIG. 6, in step S212, when the second interface object is obtained according to height order from high to low, B3 is obtained first ("2*2" indicates that the B3 has "a width of two columns and a height of two rows"), then the historical display position (a display area starting from a second row and a third column, having a height extending by two rows and a width extending by two columns to right) of the B3 is determined as an unavailable display area (because a second row, a third column and a fourth column of the display area have been updated to the display position of the first interface object), and then in step S212, a position is searched for by taking the first row and the first column of the interface area as the searching starting point, and by moving in the manner of increasing the row sequence number by one sequentially or increasing the column sequence number by one sequentially, until a display area which may be used to display the B3 (that is, a display area as shown in (a3)) is found through searching. Certainly, in step S212, a manner of searching for a historical idle area may be also used to find the display area as shown in (a3), which is taken as the display position of the B3. As for other second interface objects (B1, B2, C1, C2, D1, D2, D3, D4) on the interface, display positions may be searched for in a same manner of searching for the display position of the B3, and details are not repeatedly described herein. Further, referring to (a4) of FIG. 6, after processing in steps S213 and S214, on a final display interface, the first interface object is displayed in the second area, while the second interface objects are also respectively displayed in the positions searched in step S212.

FIG. 6 shows a schematic diagram of an example of moving the first interface object A ("4*1") towards the second interface object B3 ("2*2") narrower and higher than the first interface object.

In a specific implementation, because according to the embodiment of the present invention, the display positions of the first interface object and the second interface object on the interface are both updated, a moving range of the first interface object may be not limited. Therefore, in the present invention, it is implemented that the first interface object moves to any position on the interface. Specifically, reference may be made to a moving display effect diagram of a first interface object in other scenarios of FIG. 7 to FIG. 9. It can be known from FIG. 7, when both a height and a width of a first interface object Widget 01 are equal to a height and a width of a second interface object Widget 02, it may be implemented by using the method according to the embodiment of the present invention that the first interface object moves to the second interface object Widget 02. It can be known from FIG. 8, when both a height and a width of the first interface object A are respectively greater than or equal to a height and a width of a second interface object B1, it may be implemented by using the method according to the embodiment of the present invention that the first interface object moves to the second interface object B1. It can be known from FIG. 9, when both a height and a width of the first interface object A1 are respectively less than or equal to a height and a width of a second interface object B, it may be implemented by using the method according to the embodiment of the present invention that the first interface object A1 moves to the second interface object B.

It can be seen from the foregoing that, in some feasible implementation manners of the present invention, the instruction for moving the first interface object on the interface from the first area to the second area is received; the display position of the first interface object on the interface is updated to the second area according to the received instruction; the second interface object is obtained according to the preset rule; the display position for the second interface object is searched for in the entire interface range on the interface except the second area, where the second interface object is the interface object on the interface except the first interface object; the display position of the second interface object is updated according to the display position found through searching; and all the interface objects are displayed on the interface according to the display positions of all the interface objects. Because in the embodiment of the present invention, the display positions of the first interface object and the second interface object on the interface are both updated, a moving range of the first interface object may be not limited. Therefore, in the present invention, it is implemented that the first interface object moves to any position on the interface, which improves user experience.

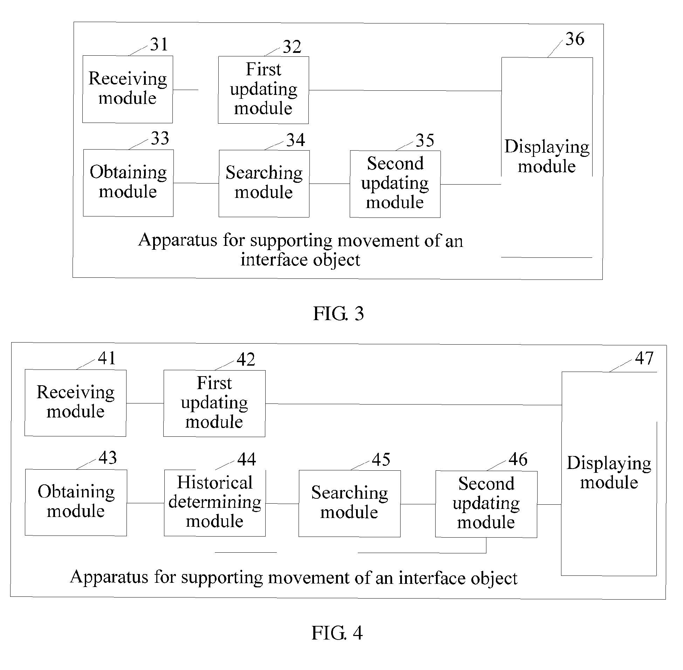

FIG. 3 is a schematic structural composition diagram of a first embodiment of an apparatus for supporting movement of an interface object according to the present invention. As shown in FIG. 3, the apparatus for supporting intelligent movement of an interface object according to an embodiment of the present invention may include: a receiving module 31, a first updating module 32, an obtaining module 33, a searching module 34, a second updating module 35 and a displaying module 36.

The receiving module 31 is configured to receive an instruction for moving a first interface object on an interface from a first area to a second area.

In a specific implementation, the second area in the embodiment of the present invention may be any area, which may be used to display the first interface object, on the interface except the first area.

In a specific implementation, the interface object in the embodiment of the present invention includes any icon which may be displayed on the interface, where the interface may be a startup desktop or an application program interface after entering an application program; the interface object may be a desktop widget Widget on the desktop and an application shortcut Shortcut on the desktop; and the interface object may also be a widget or a shortcut on an opened application program interface.

The first updating module 32 is configured to update, according to the instruction received by the receiving module 31, a display position of the first interface object on the interface to the second area.

The obtaining module 33 is configured to obtain a second interface object according to a preset rule.

The searching module 34 is configured to search for, in an entire interface range on the interface except the second area, a display position for the second interface object obtained by the obtaining module 33.

In a specific implementation, the second interface object is an interface object on the interface except the first interface object. In some feasible implementation manners, there may be one second interface object (for example, when there are only two interface objects on the interface, one of which is a first interface object and the other of which is a second interface object). In some feasible implementation manners, there are multiple second interface objects (for example, when there are three or more interface objects on the interface, one of which is a first interface object, and any other interface object of which except the first interface object is a second interface object). Moreover, when there are multiple second interface objects, the obtaining module 33 needs to obtain the second interface object more than once according to the preset rule, and the searching module 34 needs to search for the display position for the second interface object each time when the obtaining module 33 obtains the second interface object.

In some feasible implementation manners, the preset rule includes any rule, as long as the rule may be used to appoint order of obtaining the second interface object, such as: obtaining the second interface object according to height order from high to low; or obtaining the second interface object according to width order from wide to narrow; or obtaining the second interface object according to area order from big to small; or obtaining the second interface object according to height order from low to high; or obtaining the second interface object according to width order from narrow to wide; or, according to area order from small to big; or, in a case with an equal height, obtaining the second interface object according to width order from wide to narrow; or, in a case with an equal width, obtaining the second interface object according to height order from high to low.

In some feasible implementation manners, the embodiment of the present invention may indicate the display position of the interface object on the interface through coordinates on the interface, where the coordinates are expressed in multiple forms, such as, according to vertex coordinates of the interface area (pixel coordinates of four vertexes of the interface area), or according to row and column coordinates occupied by the interface area (a starting row and a starting column of the interface area, a height in the row direction (the number of rows extending from the starting row), and a width in the column direction (the number of columns extending from the starting column)).

The following takes the row and column coordinates occupied by the interface area as an example, to describe an expression manner of the display position of the interface object on the interface. For example, referring to FIG. 6, each horizontal line in the display area in FIG. 6 is a row on a screen, and each vertical line is a column on the screen. Then the coordinates (1, 1, 1, 1) may indicate that the display position of the interface object on the interface is an interface area starting from a first row (a first horizontal line on the interface) and a first column (a first vertical line on the interface) on the interface, having a height of one row (extending by one row downward from the first row) and having a width of one column (extending by one column to right from the first column), that is, an area indicated by a first grid on the interface. In the same way, coordinates (a, b, c, d) may indicate that the display position of the interface object on the interface is an interface area starting from an a^{th} row and a b^{th} column on the interface, having a height of c rows (extending by c rows downward from the a^{th} row), and having a width of d columns (extending by d columns to right from the b^{th} column). Generally, a range of the interface area is limited, and the range of a, b, c, and d is also limited. Generally, a+c is less than or equal to the maximum number of rows on the interface; b+d is less than or equal to the maximum number of columns on the interface. In this way, a display position on the interface of an interface object A on the interface may be indicated as (1, 1, 1, 4), indicating that the display position of the interface object A on the interface is an interface area starting from a first row and a first column on the interface, and having a height of one row (extending by one row downward from the first row) and a width of four columns (extending by four columns to right from the first column) (the figure only shows the width and the height of the interface object, for example, "4*1" indicates that the width of the interface object A is four columns and the height thereof is one row).

In some feasible implementation manners, the searching module 34 specifically searches for a position by taking the first row and the first column of the interface area as a searching starting point, and by moving in a manner of increasing a row sequence number by one sequentially or increasing a column sequence number by one sequentially, until the display area which may be used to display the second interface object is found through searching. Certainly, in a specific implementation, the searching module 34 may also take any other position on the interface as the searching starting point. Certainly, in addition, the searching module 34 may further search for an idle area in a historical record according to a set rule (the rule may be similar to the rule for obtaining the second interface object, and details are not repeatedly described herein), until the display area which may be used to display the second interface object is found through searching.

The second updating module 35 is configured to update a display position of the second interface object according to the display position found through searching by the searching module 34.

It should be noted that, display positions of all interface objects are saved in preset positions, for example: the display positions of all the interface objects may be saved in a preset XML file; or may also be saved in a preset data sheet. As for a storage manner, reference may be made to a specific implementation of the prior art, and details are not repeatedly described herein. Therefore, the first updating module and the second updating module are configured to update the display positions of the first interface object and the second interface object in a preset saving position of the display positions.

The displaying module 36 is configured to display all the interface objects on the interface according to the display positions of all the interface objects.

When the interface object is displayed on the interface, the displaying module 36 may read the display positions of all the interface objects on the interface from the foregoing preset positions, and all the interface objects are displayed on the interface. As for a specific reading and displaying manner, reference may be made to a specific implementation of the prior art, and details are not repeatedly described herein.

With reference to FIG. 6, the following further describes in detail a processing flow and a processing result of the embodiment. Referring to FIG. 6, (a1) of FIG. 6 is an interface state diagram of the first interface object before being moved; (a2) of FIG. 6 is a schematic diagram of a display position in the second area on the interface where the first interface object is displayed; (a3) of FIG. 6 is a schematic diagram of display positions on the interface of the first interface object and an obtained second interface object having a highest height; and (a4) of FIG. 6 is a display effect diagram of a final interface.

Referring to (a1) of FIG. 6, the receiving module 31 may receive an instruction for moving the first interface object A on the interface from a first area 10 to a second area 20 according to an operation made by a user on the interface (for example, the user presses the first interface object on the interface and pulls the first interface object to the second area, where a circle and an arrow in the figure show a direction in which the user moves the first interface object); further, referring to (a2) of FIG. 6, the first updating module 32 may update the display position of the first interface object A on the interface to the second area 20 according to the received instruction. Further, referring to (a3) of FIG. 6, when obtaining the second interface object according to height order from high to low, the obtaining module 33 may obtain B3 first ("2*2" indicates that the B3 has "a width of two columns and a height of two rows"), and then the searching module 34 searches for a position by taking the first row and the first column of the interface area as the searching starting point, and by moving in the manner of increasing the row sequence number by one sequentially or increasing the column sequence number by one sequentially, until a display area which may be used to display the B3 (that is, a display area as shown in (a3)) is found through searching. Certainly, the searching module 34 may also find the display area as shown in (a3), which is taken as the display position of the B3, in a manner of searching for a historical idle area. Other second interface objects (B1, B2, C1, C2, D1, D2, D3, D4) on the interface may be obtained by the obtaining module 33 in a manner of obtaining the B3, and display positions may be searched for by the searching module 34 in a same manner of searching for the display position of the B3. Details are not repeatedly described herein. Further, referring to (a4) of FIG. 6, after processing by the second updating module 35 and the displaying module 36, on a final display interface, the first interface object is displayed in the second area, while the second interface objects are also respectively displayed in the positions found through searching by the searching module 34.

FIG. 6 shows a schematic diagram of an example of moving the first interface object A ("4*1") towards the second interface object B3 ("2*2") narrower and higher than the first interface object.

In a specific implementation, because according to the embodiment of the present invention, the display positions of the first interface object and the second interface object on the interface are both updated, a moving range of the first interface object may be not limited. Therefore, in the present invention, it is implemented that the first interface object moves to any position on the interface. Specifically, reference may be made to a moving display effect diagram of a first interface object in other scenarios of FIG. 7 to FIG. 9. It can be known from FIG. 7, when both a height and a width of a first interface object Widget 01 are equal to a height and a width of a second interface object Widget 02, it may be implemented by using the method according to the embodiment of the present invention that the first interface object moves to the second interface object Widget 02. It can be known from FIG. 8, when both a height and a width of the first interface object A are respectively greater than or equal to a height and a width of a second interface object B1, it may be implemented by using the method according to the embodiment of the present invention that the first interface object moves to the second interface object B1. It can be known from FIG. 9, when both a height and a width of the first interface object A1 are respectively less than or equal to a height and a width of a second interface object B, it may be implemented by using the method according to the embodiment of the present invention that the first interface object A1 moves to the second interface object B.

It can be seen from the foregoing that, in some feasible implementation manners of the present invention, the instruction for moving the first interface object on the interface from the first area to the second area is received; the display position of the first interface object on the interface is updated to the second area according to the received instruction; the second interface object is obtained according to the preset rule; the display position for the second interface object is searched for in the entire interface range on the interface except the second area, where the second interface object is the interface object on the interface except the first interface object; the display position of the second interface object is updated according to the display position found through searching; and all the interface objects are displayed on the interface according to the display positions of all the interface objects. Because in the embodiment of the present invention, the display positions of the first interface object and the second interface object on the interface are both updated, a moving range of the first interface object may be not limited. Therefore, in the present invention, it is implemented that the first interface object moves to any position on the interface, which improves user experience.

FIG. 4 is a schematic structural composition diagram of a second embodiment of an apparatus for supporting movement of an interface object according to the present invention. As shown in FIG. 4, the apparatus for supporting intelligent movement of an interface object according to an embodiment of the present invention may include: a receiving module 41, a first updating module 42, an obtaining module 43, a historical determining module 44, a searching module 45, a second updating module 46 and a displaying module 47.

The receiving module 41 is configured to receive an instruction for moving a first interface object on an interface from a first area to a second area.

In a specific implementation, the second area in the embodiment of the present invention may be any area, which may be used to display the first interface object, on the interface except the first area.

In a specific implementation, the interface object in the embodiment of the present invention includes any icon which may be displayed on the interface, where the interface may be a startup desktop or an application program interface after entering an application program; the interface object may be a desktop widget Widget on the desktop and an application shortcut Shortcut on the desktop; and the interface object may also be a widget or a shortcut on an opened application program interface.

The first updating module 42 is configured to update, according to the instruction received by the receiving module 41, a display position of the first interface object on the interface to the second area.

The obtaining module 43 is configured to obtain a second interface object according to a preset rule.

The historical determining module 44 is configured to determine whether a historical display position of the second interface object obtained by the obtaining module 43 is an available display area, send the historical display position as the display position of the second interface object to the second updating module 46 when the historical display position of the second interface object is the available display area; and start the searching module 45 when the historical display position of the second interface object is an occupied display area.

The searching module 45 is configured to search for, in an entire interface range on the interface except the second area, a display position for the second interface object obtained by the obtaining module 43.

In a specific implementation, the second interface object is an interface object on the interface except the first interface object. In some feasible implementation manners, there may be one second interface object (for example, when there are only two interface objects on the interface, one of which is a first interface object and the other of which is a second interface object). In some feasible implementation manners, there are multiple second interface objects (for example, when there are three or more interface objects on the interface, one of which is a first interface object, and any other interface object of which except the first interface object is a second interface object). Moreover, when there are multiple second interface objects, the obtaining module 43 needs to obtain the second interface object more than once according to the preset rule, and each time when the obtaining module 43 obtains the second interface object, the historical determining module 44 needs to determine whether the historical display position of the second interface object is the available display area; and send, when a determining result is yes, the historical display position taken as the display position of the second interface object to the second updating module 46; or otherwise, notify the searching module 45 to search for, in an entire interface range on the interface except the second area, the display position for the second interface object.

In some feasible implementation manners, the preset rule includes any rule, as long as the rule may be used to appoint order of obtaining the second interface object, such as: obtaining the second interface object according to height order from high to low; or obtaining the second interface object according to width order from wide to narrow; or obtaining the second interface object according to area order from big to small; or obtaining the second interface object according to height order from low to high; or obtaining the second interface object according to width order from narrow to wide; or, according to area order from small to big; or, in a case with an equal height, obtaining the second interface object according to width order from wide to narrow; or, in a case with an equal width, obtaining the second interface object according to height order from high to low.

In some feasible implementation manners, the embodiment of the present invention may indicate the display position of the interface object on the interface through coordinates on the interface, where the coordinates are expressed in multiple forms, such as, according to vertex coordinates of the interface area (pixel coordinates of four vertexes of the interface area), or according to row and column coordinates occupied by the interface area (a starting row and a starting column of the interface area, a height in the row direction (the number of rows extending from the starting row), and a width in the column direction (the number of columns extending from the starting column)).

The following takes the row and column coordinates occupied by the interface area as an example, to describe an expression manner of the display position of the interface object on the interface. For example, referring to FIG. 6, each horizontal line in the display area in FIG. 6 is a row on a screen, and each vertical line is a column on the screen. Then the coordinates (1, 1, 1, 1) may indicate that the display position of the interface object on the interface is an interface area starting from a first row (a first horizontal line on the interface) and a first column (a first vertical line on the interface) on the interface, having a height of one row (extending by one row downward from the first row) and having a width of one column (extending by one column to right from the first column), that is, an area indicated by a first grid on the interface. In the same way, coordinates (a, b, c, d) may indicate that the display position of the interface object on the interface is an interface area starting from an a^{th} row and a b^{th} column on the interface, having a height of c rows (extending by c rows downward from the a^{th} row), and having a width of d columns (extending by d columns to right from the b^{th} column). Generally, a range of the interface area is limited, and the range of a, b, c, and d is also limited. Generally, a+c is less than or equal to the maximum number of rows on the interface; b+d is less than or equal to the maximum number of columns on the interface. In this way, a display position on the interface of an interface object A on the interface may be indicated as (1, 1, 1, 4), indicating that the display position of the interface object A on the interface is an interface area starting from a first row and a first column on the interface, and having a height of one row (extending by one row downward from the first row) and a width of four columns (extending by four columns to right from the first column) (the figure only shows the width and the height of the interface object, for example, "4*1" indicates that the width of the interface object A is four columns and the height thereof is one row).

In some feasible implementation manners, the searching module 45 specifically searches for a position by taking the first row and the first column of the interface area as a searching starting point, and by moving in a manner of increasing a row sequence number by one sequentially or increasing a column sequence number by one sequentially, until the display area which may be used to display the second interface object is found through searching. Certainly, in a specific implementation, the searching module 45 may also take any other position on the interface as the searching starting point. Certainly, in addition, the searching module 45 may further search for an idle area in a historical record according to a set rule (the rule may be similar to the rule for obtaining the second interface object, and details are not repeatedly described herein), until the display area which may be used to display the second interface object is found through searching.

In the embodiment of the present invention, when the historical display position of the second interface object is the available display area, the historical determining module 44 takes the historical display position as the display position of the second interface object, which thereby saves a procedure for searching for the display position for the second interface object, and improves efficiency of moving the first interface object.

The second updating module 46 is configured to update a display position of the second interface object according to the display position found by the searching module 45.

It should be noted that, display positions of all interface objects are saved in preset positions, for example: the display positions of all the interface objects may be saved in a preset XML file; or may also be saved in a preset data sheet. As for a storage manner, reference may be made to a specific implementation of the prior art, and details are not repeatedly described herein. Therefore, the first updating module and the second updating module are configured to update the display positions of the first interface object and the second interface object in a preset saving position of the display positions.

The displaying module 47 is configured to display all interface objects on the interface according to display positions of all the interface objects.

When the interface object is displayed on the interface, the displaying module 36 may read the display positions of all the interface objects on the interface from the foregoing preset positions, and all the interface objects are displayed on the interface. As for a specific reading and displaying manner, reference may be made to a specific implementation of the prior art, and details are not repeatedly described herein.

With reference to FIG. 6, the following further describes in detail a processing flow and a processing result of the embodiment. Referring to FIG. 6, (a1) of FIG. 6 is an interface state diagram of the first interface object before being moved; (a2) of FIG. 6 is a schematic diagram of a display position in the second area on the interface where the first interface object is displayed; (a3) of FIG. 6 is a schematic diagram of display positions on the interface of the first interface object and an obtained second interface object having a highest height; and (a4) of FIG. 6 is a display effect diagram of a final interface.

Referring to (a1) of FIG. 6, the receiving module 41 may receive an instruction for moving the first interface object A on the interface from the first area to the second area according to an operation made by a user on the interface (for example, the user presses the first interface object on the interface and pulls the first interface object to the second area, where a circle and an arrow in the figure show a direction in which the user moves the first interface object); further, referring to (a2) of FIG. 6, the first updating module 42 may update the display position of the first interface object A on the interface to the second area according to the received instruction. Further, referring to (a3) of FIG. 6, when obtaining the second interface object according to height order from high to low, the obtaining module 43 may obtain B3 first ("2*2" indicates that the B3 has "a width of two columns and a height of two rows"), then the historical determining module 44 determines the historical display position (a display area starting from a second row and a third column, having a height extending by two rows and a width extending by two columns to right) of the B3 as an unavailable display area (because a second row, a third column and a fourth column of the display area have been updated to the display position of the first interface object), and then notifies the searching module 45, and the searching module 45 searches for the position by taking the first row and the first column of the interface area as the searching starting point and by moving in the manner of increasing the row sequence number by one sequentially or increasing the column sequence number by one sequentially, until a display area which may be used to display the B3 (that is, a display area as shown in (a3)) is found through searching. Certainly, the searching module 45 may also find the display area as shown in (a3), which is taken as the display position of B3, in a manner of searching for a historical idle area. As for other second interface objects (B1, B2, C1, C2, D1, D2, D3, D4) on the interface, display positions may be searched for in a same manner of searching for the display position of the B3, and details are not repeatedly described herein. Further, referring to (a4) of FIG. 6, after processing by the second updating module 46 and the displaying module 47, on a final display interface, the first interface object is displayed in the second area, while the second interface objects are also respectively displayed in the positions searched by the searching module 45.

FIG. 6 shows a schematic diagram of an example of moving the first interface object A ("4*1") towards the second interface object B3 ("2*2") narrower and higher than the first interface object.

In a specific implementation, because according to the embodiment of the present invention, the display positions of the first interface object and the second interface object on the interface are both updated, a moving range of the first interface object may be not limited. Therefore, in the present invention, it is implemented that the first interface object moves to any position on the interface. Specifically, reference may be made to a moving display effect diagram of a first interface object in other scenarios of FIG. 7 to FIG. 9. It can be known from FIG. 7, when both a height and a width of a first interface object Widget 01 are equal to a height and a width of a second interface object Widget 02, it may be implemented by using the method according to the embodiment of the present invention that the first interface object moves to the second interface object Widget 02. It can be known from FIG. 8, when both a height and a width of the first interface object A are respectively greater than or equal to a height and a width of a second interface object B1, it may be implemented by using the method according to the embodiment of the present invention that the first interface object moves to the second interface object B1. It can be known from FIG. 9, when both a height and a width of the first interface object A1 are respectively less than or equal to a height and a width of a second interface object B, it may be implemented by using the method according to the embodiment of the present invention that the first interface object A1 moves to the second interface object B.

It can be seen from the foregoing that, in some feasible implementation manners of the present invention, the instruction for moving the first interface object on the interface from the first area to the second area is received; the display position of the first interface object on the interface is updated to the second area according to the received instruction; the second interface object is obtained according to the preset rule; the display position for the second interface object is searched for in the entire interface range on the interface except the second area, where the second interface object is the interface object on the interface except the first interface object; the display position of the second interface object is updated according to the display position found through searching; and all the interface objects are displayed on the interface according to the display positions of all the interface objects. Because in the embodiment of the present invention, the display positions of the first interface object and the second interface object on the interface are both updated, a moving range of the first interface object may be not limited. Therefore, in the present invention, it is implemented that the first interface object moves to any position on the interface, which improves user experience.

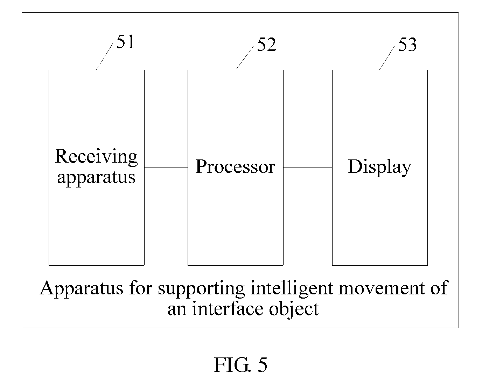

FIG. 5 is a schematic structural composition diagram of a third embodiment of a terminal device according to the present invention. As shown in FIG. 5, the terminal device according to an embodiment of the present invention may include a receiving apparatus 51, a processor 52 and a display 53.

The receiving apparatus 51 is configured to receive an instruction for moving a first interface object on an interface from a first area to a second area.

In a specific implementation, the second area in the embodiment of the present invention may be any area, which may be used to display the first interface object, on the interface except the first area.

In a specific implementation, the interface object in the embodiment of the present invention includes any icon which may be displayed on the interface, where the interface may be a startup desktop or an application program interface after entering an application program; the interface object may be a desktop widget Widget on the desktop and an application shortcut Shortcut on the desktop; and the interface object may also be a widget or a shortcut on an opened application program interface.

The processor 52 is configured to update, according to the instruction received by the receiving apparatus 51, a display position of the first interface object on the interface to the second area; obtain a second interface object according to a preset rule; search for, in an entire interface range on the interface except the second area, the display position for the second interface object; and update the display position of the second interface object according to the display position found through searching, where the second interface object is an interface object on the interface except the first interface object.

In a specific implementation, the second interface object is an interface object on the interface except the first interface object. In some feasible implementation manners, there may be one second interface object (for example, when there are only two interface objects on the interface, one of which is a first interface object and the other of which is a second interface object). In some feasible implementation manners, there are multiple second interface objects (for example, when there are three or more interface objects on the interface, one of which is a first interface object, and any other interface object of which except the first interface object is a second interface object). Moreover, when there are multiple second interface objects, the processor 52 needs to obtain the second interface object more than once according to the preset rule, and search for the display position for the second interface object each time when the second interface object is obtained.

In some feasible implementation manners, the preset rule includes any rule, as long as the rule may be used to appoint order of obtaining the second interface object: obtaining the second interface object according to height order from high to low; or obtaining the second interface object according to width order from wide to narrow; or obtaining the second interface object according to area order from big to small; or obtaining the second interface object according to height order from low to high; or obtaining the second interface object according to width order from narrow to wide; or, according to area order from small to big; or, in a case with an equal height, obtaining the second interface object according to width order from wide to narrow; or, in a case with an equal width, obtaining the second interface object according to height order from high to low. Which kind of manner is specifically adopted should be determined according to an actual requirement, which is not specifically limited in the embodiment.

In some feasible implementation manners, the embodiment of the present invention may indicate the display position of the interface object on the interface through coordinates on the interface, where the coordinates are expressed in multiple forms, such as, according to vertex coordinates of the interface area (pixel coordinates of four vertexes of the interface area), or according to row and column coordinates occupied by the interface area (a starting row and a starting column of the interface area, a height in the row direction (the number of rows extending from the starting row), and a width in the column direction (the number of columns extending from the starting column)).

The following takes the row and column coordinates occupied by the interface area as an example, to describe an expression manner of the display position of the interface object on the interface. For example, referring to FIG. 6, each horizontal line in the display area in FIG. 6 is a row on a screen, and each vertical line is a column on the screen. Then the coordinates (1, 1, 1, 1) may indicate that the display position of the interface object on the interface is an interface area starting from a first row (a first horizontal line on the interface) and a first column (a first vertical line on the interface) on the interface, having a height of one row (extending by one row downward from the first row) and having a width of one column (extending by one column to right from the first column), that is, an area indicated by a first grid on the interface. In the same way, coordinates (a, b, c, d) may indicate that the display position of the interface object on the interface is an interface area starting from an a^{th} row and a b^{th} column on the interface, having a height of c rows (extending by c rows downward from the a^{th} row), and having a width of d columns (extending by d columns to right from the b^{th} column). Generally, a range of the interface area is limited, and the range of a, b, c, and d is also limited. Generally, a+c is less than or equal to the maximum number of rows on the interface; b+d is less than or equal to the maximum number of columns on the interface. In this way, a display position on the interface of an interface object A on the interface may be indicated as (1, 1, 1, 4), indicating that the display position of the interface object A on the interface is an interface area starting from a first row and a first column on the interface, and having a height of one row (extending by one row downward from the first row) and a width of four columns (extending by four columns to right from the first column) (the figure only shows the width and the height of the interface object, for example, "4*1" indicates that the width of the interface object A is four columns and the height thereof is one row).

In some feasible implementation manners, the processor 52 specifically searches for a position by taking the first row and the first column of the interface area as a searching starting point, and by moving in a manner of increasing a row sequence number by one sequentially or increasing a column sequence number by one sequentially, until the display area which may be used to display the second interface object is found through searching. Certainly, in a specific implementation, the processor 52 may also take any other position on the interface as the searching starting point. Certainly, in addition, the processor 52 may further search for an idle area in a historical record according to a set rule (the rule may be similar to the rule for obtaining the second interface object, and details are not repeatedly described herein), until the display area which may be used to display the second interface object is found through searching.

In some feasible implementation manners, after obtaining the second interface object according to the preset rule, the processor 52 is further configured to determine whether a historical display position of the second interface object is an available display area, and when the historical display position of the second interface object is the available display area, take the historical display position as the display position of the second interface object; and when the historical display position of the second interface object is an occupied display area, search for, in the entire interface range on the interface except the second area, the display position for the second interface object. When the historical display position of the second interface object is the occupied display area, a manner of searching for, in the entire interface range on the interface except the second area, the display position for the second interface object may also be that: The processor 52 specifically searches for a position by taking a first row and a first column of the interface area as a searching starting point, and by moving in a manner of increasing a row sequence number by one sequentially or increasing a column sequence number by one sequentially, until a display area which may be used to display the second interface object is found through searching. Certainly, in a specific implementation, the processor 52 may also take any other position on the interface as the searching starting point. Certainly, in addition, the processor 52 may further search for an idle area in a historical record according to a set rule (the rule may be similar to the rule for obtaining the second interface object, and details are not repeatedly described herein), until the display area which may be used to display the second interface object is found through searching. In this case, when the historical display position of the second interface object is the available display area, the processor 52 takes the historical display position as the display position of the second interface object, which thereby saves a procedure for searching for the display position for the second interface object, and improves efficiency of moving the first interface object.

The display 53 is configured to display all interface objects on the interface according to display positions of all the interface objects which are processed by the processor 52.

It should be noted that, the display positions of all the interface objects are saved in preset positions, for example: the display positions of all the interface objects may be saved in a preset XML file; or may also be saved in a preset data sheet. As for a storage manner, reference may be made to a specific implementation of the prior art, and details are not repeatedly described herein. Therefore, the first updating module and the second updating module are configured to update the display positions of the first interface object and the second interface object in a preset saving position of the display positions.

When the interface object is displayed on the interface, the display 53 may read the display positions of all the interface objects on the interface from the foregoing preset positions, and all the interface objects are displayed on the interface. As for a specific reading and displaying manner, reference may be made to a specific implementation of the prior art, and details are not repeatedly described herein.

With reference to FIG. 6, the following further describes in detail a processing flow and a processing result of the embodiment. Referring to FIG. 6, (a1) of FIG. 6 is an interface state diagram of the first interface object before being moved; (a2) of FIG. 6 is a schematic diagram of a display position in the second area on the interface where the first interface object is displayed; (a3) of FIG. 6 is a schematic diagram of display positions on the interface of the first interface object and an obtained second interface object having a highest height; and (a4) of FIG. 6 is a display effect diagram of a final interface.

Referring to (a1) of FIG. 6, the receiving apparatus 51 may receive an instruction for moving the first interface object A on the interface from the first area to the second area according to an operation made by a user on the interface (for example, the user presses the first interface object on the interface and pulls the first interface object to the second area, where a circle and an arrow in the figure show a direction in which the user moves the first interface object); further, referring to (a2) of FIG. 6, the processor 52 updates the display position of the first interface object A on the interface to the second area according to the received instruction. Further, referring to (a3) of FIG. 6, when obtaining the second interface object according to height order from high to low, the processor 52 obtains B3 first ("2*2" indicates that the B3 has "a width of two columns and a height of two rows"), and then determines the historical display position (a display area starting from a second row and a third column, having a height extending by two rows and a width extending by two columns to right) of B3 as an unavailable display area (because a second row, a third column and a fourth column of the display area have been updated to the display position of the first interface object), and then the processor 52 searches for the position by taking the first row and the first column of the interface area as the searching starting point, and by moving in the manner of increasing the row sequence number by one sequentially or increasing the column sequence number by one sequentially, until a display area which may be used to display the B3 (that is, a display area as shown in (a3)) is found through searching. Certainly, the processor 52 may also find the display area shown in (a3), which is taken as the display position of the B3, in a manner of searching for a historical idle area. As for other second interface objects (B1, B2, C1, C2, D1, D2, D3, D4) on the interface, display positions may be searched for in a same manner of searching for the display position of the B3, and details are not repeatedly described herein. Further, referring to (a4) of FIG. 6, after processing by the processor 52, on a final display interface of the display 53, the first interface object is displayed in the second area, while the second interface objects are also respectively displayed in the positions searched by the processor 52.

In some feasible implementation manners, when obtaining the second interface object according to height order from high to low, the processor 52 obtains the B3 first ("2*2" indicates that the B3 has "a width of two columns and a height of two rows"), or may also directly search for the position by taking the first row and the first column of the interface area as the searching starting point, and by moving in the manner of increasing the row sequence number by one sequentially or increasing the column sequence number by one sequentially, until a display area which may be used to display the B3 (that is, a display area as shown in (a3)) is found through searching without the need of determining whether the historical display position of the B3 is the available display area. Certainly, the processor 52 may also find the display area shown in (a3), which is taken as the display position of the B3, in a manner of searching for a historical idle area. As for other second interface objects (B1, B2, C1, C2, D1, D2, D3, D4) on the interface, display positions may be searched for in a same manner of searching for the display position of the B3, and details are not repeatedly described herein.

In a specific implementation, the receiving apparatus 51 of the embodiment may perform a function of the receiving module in FIG. 3 or FIG. 4. The processor 52 of the embodiment may perform functions of all other modules except the receiving module and the displaying module in FIG. 3 or FIG. 4. The display 53 of the embodiment may perform a function of the displaying module in FIG. 3 or FIG. 4.

What are listed in the foregoing are only exemplary embodiments of the present invention, but are not intended to limit the scope of the claims of the present invention. Therefore, any equivalent variation made according to the claims of the present invention shall still fall within the scope of the present invention.

## Claims

1. A method for moving an interface object, comprising:
receiving an instruction for moving a first interface object on an interface from a first area to a second area;
updating, according to the received instruction, a display position of the first interface object on the interface to the second area;
obtaining a second interface object according to a preset rule, and searching for, in an entire interface range on the interface except the second area, a display position for the second interface object, wherein the second interface object is an interface object on the interface except the first interface object;
updating a display position of the second interface object according to the display position found through searching; and
displaying all interface objects on the interface according to display positions of all the interface objects.

2. The method for moving an interface object according to claim 1, wherein the searching for, in an entire interface range on the interface except the second area, a display position for the second interface object comprises:
taking a historical display position of the second interface object as the display position of the second interface object when the historical display position is an available display area; and
searching for, in the entire interface range on the interface except the second area, the display position for the second interface object when the historical display position of the second interface object is an occupied display area, wherein the display position is a remaining available display area on the interface.

3. The method for moving an interface object according to claim 1 or 2, wherein the searching for, in an entire interface range on the interface except the second area, a display position for the second interface object comprises:
searching for a position by taking a first row and a first column of the interface area as a searching starting point, and by moving in a manner of increasing a row sequence number by one sequentially or increasing a column sequence number by one sequentially, until a display area which may be used to display the second interface object is found through searching.

4. The method for moving an interface object according to claim 1 or 2, wherein the preset rule comprises:
height order from high to low; or,
width order from wide to narrow; or,
area order from big to small.

5. An apparatus for supporting movement of an interface object, comprising:
a receiving module, configured to receive an instruction for moving a first interface object on an interface from a first area to a second area;
a first updating module, configured to update, according to the instruction received by the receiving module, a display position of the first interface object on the interface to the second area;
an obtaining module, configured to obtain a second interface object according to a preset rule;
a searching module, configured to search for, in an entire interface range on the interface except the second area, a display position for the second interface object obtained by the obtaining module, wherein the second interface object is an interface object on the interface except the first interface object;
a second updating module, configured to update a display position of the second interface object according to the display position found through searching by the searching module; and
a displaying module, configured to display all interface objects on the interface according to display positions of all the interface objects.

6. The apparatus for supporting movement of an interface object according to claim 5, further comprising:
a historical determining module, configured to determine whether a historical display position of the second interface object is an available display area, and
send the historical display position as the display position of the second interface object to the second updating module when the historical display position of the second interface object is an available display area; and
start the searching module when the historical display position of the second interface object is an occupied display area.

7. The apparatus for supporting movement of an interface object according to claim 5 or 6, wherein the searching module is specifically configured to search for a position by taking a first row and a first column of the interface area as a searching starting point, and by moving in a manner of increasing a row sequence number by one sequentially or increasing a column sequence number by one sequentially, until a display area which may be used to display the second interface object is found through searching.

8. The apparatus for supporting movement of an interface object according to claim 5 or 6, wherein the preset rule comprises:
height order from high to low; or,
width order from wide to narrow; or,
area order from big to small.
